(19) Europäisches Patentamt

European Patent Office

Office européen des brevets

(11) **EP 0 545 125 B1**

(12) **EUROPÄISCHE PATENTSCHRIFT**

(45) Veröffentlichungstag und Bekanntmachung des Hinweises auf die Patenterteilung:
**09.04.1997 Patentblatt 1997/15**

(51) Int Cl.⁶: **H04B 1/16**

(21) Anmeldenummer: **92119510.3**

(22) Anmeldetag: **14.11.1992**

(54) **Einrichtung zum Empfang eines FM-Signals**

Device for receiving FM-signals

Dispositif pour la réception de signaux FM

(84) Benannte Vertragsstaaten:
**AT CH DE FR LI PT**

(30) Priorität: **30.11.1991 DE 4139525**

(43) Veröffentlichungstag der Anmeldung:
**09.06.1993 Patentblatt 1993/23**

(73) Patentinhaber: **Blaupunkt-Werke GmbH**
**D-31132 Hildesheim (DE)**

(72) Erfinder: **Kässer, Jürgen, Dr.**
**W-3201 Diekholzen (DE)**

(56) Entgegenhaltungen:
**EP-A- 0 255 553**

• **PATENT ABSTRACTS OF JAPAN vol. 1, no. 58 6. Juni 1977 & JP-A-52 002 302**

**Beschreibung**

Um beim Empfang von FM-Signalen Störungen durch Sender in Nachbarkanälen so gering wie möglich zu halten, ist eine möglichst geringe Bandbreite der Zwischenfrequenzfilter erforderlich. Ohne weitere Maßnahmen ist jedoch mindestens eine Bandbreite notwendig, die durch den maximalen Frequenzhub und die entsprechende Breite der Seitenbänder gegeben ist. Eine weitere Verringerung der Bandbreite des Zwischenfrequenzfilters ist durch eine Nachsteuerung der Resonanzfrequenz eines dem Demodulator vorgeschalteten schmalbandigen Zwischenfrequenzfilters möglich. Dabei wird die Resonanzfrequenz derart verschoben, daß der jeweilige Momentanwert der Zwischenfrequenz stets innerhalb des Durchlaßbereichs des Filters liegt.

Außerdem ist bekannt, den Oszillator für die Mischstufe durch eine aus dem niederfrequenten Ausgangssignal des Demodulators abgeleitete Spannung gleichphasig mit dem Hub der Zwischenfrequenz nachzusteuern. Dadurch wird der Frequenzhub des Zwischenfrequenzsignals stark verringert, so daß als Zwischenfrequenzfilter schmalbandige Filter verwendet werden können.

Bei beiden bekannten Schaltungsanordnungen tritt das Problem auf, daß die erforderlichen Steuerspannungen für die Nachsteuerung des Zwischenfrequenzfilters bzw. des Oszillators nur mit einer Verzögerung abgeleitet werden können, wodurch wiederum die Nachführbarkeit des Zwischenfrequenzfilters bzw. des Oszillators herabgesetzt wird. Außerdem ist die Steuerung der Resonanzfrequenz eines Zwischenfrequenzfilters mit einem größeren schaltungstechnischen Aufwand verbunden.

Aufgabe der vorliegenden Erfindung ist es, zur Unterdrückung von Störungen die Verwendung eines schmalbandigen Zwischenfrequenzfilters mit konstanter Resonanzfrequenz zu ermöglichen.

Die erfindungsgemäße Einrichtung mit den Merkmalen des Anspruchs 1 hat den Vorteil, daß zur Unterdrückung von Störungen ein schmalbandiges Zwischenfrequenzfilter mit konstanter Resonanzfrequenz verwendet werden kann, wobei eine phasenrichtige Nachsteuerung des dem schmalbandigen Filter zugeführten FM-Signals gewährleistet ist.

Die erfindungsgemäße Einrichtung ist an sich in allen Fällen anwendbar, in denen die demodulierten Signale geeignete Anteile enthalten. Dieses ist insbesondere bei einem Stereo-Multiplexsignal der Fall, womit Stereo-Rundfunkempfänger, insbesondere Autoradios, ein bevorzugtes Anwendungsgebiet der erfindungsgemäßen Einrichtung sind.

Durch den Aufbau des Signals aus mehreren schmalbandigen Anteilen nach bekannten Strukturen läßt sich eine Extrapolation auf die Vorhersage niederfrequenter Anteile zurückführen, für die das Produkt Laufzeit der Filter mal Bandbreite der Signale $<< 2\pi$ ist.

Durch die in den abhängigen Ansprüchen aufgeführten Maßnahmen sind vorteilhafte Weiterbildungen und Verbesserungen der im Anspruch 1 angegebenen Erfindung möglich.

Ein Ausführungsbeispiel der Erfindung ist in der Zeichnung anhand mehrerer Figuren dargestellt und in der nachfolgenden Beschreibung näher erläutert. Es zeigt:

Fig. 1     ein Blockschaltbild des Ausführungsbeispiels und

Fig. 2     den Frequenzgang eines bei dem Ausführungsbeispiel verwendeten Filters.

Der erfindungsgemäßen Einrichtung wird bei 1 ein mit der üblichen Bandbreite gefiltertes Zwischenfrequenz- oder komplexes Basisbandsignal zugeführt.

Das Zwischenfrequenzsignal $U_{FM1} = A_1 e^{j\Phi 1}$ wird in einem Mischer 3 mit einem weiteren Zwischenfrequenzsignal $U_{FM2} = A_2 e^{-j\Phi} 2$ gemischt. Das resultierende Zwischenfrequenzsignal

$$U_{FM} = U_{FM1} \cdot U_{FM2} = A_1 A_2 e^{j(\Phi_1 - \Phi_2)}$$

wird zu einem schmalbandigen Filter 4 geführt, das eine definierte Laufzeit aufweist. Das derart gefilterte Signal wird in einem FM-Demodulator 5 demoduliert. An dessen Ausgang 6 steht ein demoduliertes Signal an, das je nach empfangenem Sender außer einem NF-Signal (Monosignal) verschiedene zusätzliche Signale enthält. Etwaig vorhandene Radiodatensignale (RDS) und Verkehrsfunksignale werden in einer Schaltung 7, die möglichst geringe Laufzeiten für das restliche Multiplexsignal bewirkt, abgetrennt und können einem Ausgang 8 entnommen werden. Das verbleibende Stereo-Multiplexsignal enthält außer dem Monosignal einen Pilotton von 19 kHz in frequenzmodulierter Form und ein Differenzsignal $U_{L-R}$. Letzteres wird amplitudenmoduliert mit einem unterdrückten Träger von 38 kHz, phasenstarr zum Pilotton übertragen.

Das Stereo-Multiplexsignal wird in einem Stereo-Demodulator 9 demoduliert, so daß die Signale $U_L$ und $U_R$ des linken und rechten Stereo-Kanals den Ausgängen 11, 12 entnehmbar sind. Dabei sind Schaltungen besonders geeignet, die ohne weitere Filterung aus dem am Ausgang 8 anstehenden Signal die Modulationsinhalte $U_{L+R}$, $U_{L-R}$ bzw.

$U_L$, $U_R$ ermitteln, wie z. B. Schaltdemodulatoren.

Da die Beziehung besteht, daß das Produkt der Laufzeit eines Filters mal der Bandbreite des Filters eine Schwelle ($2\pi$) nicht unterschreiten kann, ergibt sich somit (bei einer Bandbreite des Audiosignals von 15 kHz und der Laufzeit des Filters im Grenzfall $\approx$ ($2\pi/50$)ms), daß die Verzögerung im Audiosignal kleiner 1/3 einer Periode bei Maximalfrequenz ist und daher recht einfach extrapoliert werden kann.

Zur Bildung des weiteren Zwischenfrequenzsignals $U_{FM2}$ werden die Signale $U_L$ und $U_R$ je einem Extrapolator 15, 16 zugeleitet. Die extrapolierten Werte des Monosignals und des Summensignals sowie die exakt vorhergesagten Signale Pilotton und Träger des Differenzsignals werden in einem Modulierer 18 dazu benutzt, ein weiteres Stereo-Multiplexsignal zu erzeugen und daraus ein komplexes FM-Signal zu generieren, das als weiteres Zwischenfrequenzsignal $U_{FM2}$ dem Mischer 3 zugeführt wird.

In den folgenden Erläuterungen zur Bildung des weiteren Zwischenfrequenzsignals $U_{FM2}$ wird von einem Stereo-Multiplexsignal

$$U_{MPX_1}(t) = U_{L+R}(t) + P \cdot \sin 2\pi f_P t + U_{L-R}(t) \cdot \sin 4\pi f_P t \qquad (1)$$

ausgegangen mit

$U_{L+R}(t)$      Monosignal,
$U_{L-R}(t)$      Differenzsignal,
$P$      Amplitude des Pilottons,
$f_P$      Frequenz des Pilottons (19 kHz).

Das Eingangssignal, das einem Eingang des Mischers 3 zugeführt wird, ist (im Basisband)

$$U_{FM1}(t) = A \cdot e^{j\Phi(t)}.$$

Dabei ist A die Amplitude und $\hat{\Phi}(t)$ die Phase des FM-Signals. Letztere folgt der Gleichung

$$\Phi(t) = \int_{-\infty}^{t} U_{MPX1}(t') dt'.$$

Am anderen Eingang des Mischers 3 liegt ein Signal

$$U_{FM2}(t) = A_0 \cdot e^{j\hat{\Phi}(t)},$$

wobei $A_0$ eine feste, vorgegebene Amplitude und $\hat{\Phi}(t)$ die Gegenphase zur Phase des FM-Signals ist - eines synthetischen Signals, das im folgenden beschrieben ist.

Am Ausgang des Mischers 3 liegt dann das Signal

$$U_{FM}(t) = A_0 \cdot A \cdot e^{j[\Phi(t) - \hat{\Phi}(t)]} \text{ an.}$$

Dieses Signal durchläuft das schmalbandige Filter 4 (bei Basisbandsignalen zwei Tiefpässe) und erleidet dabei eine Verzögerung $T_0$, die ungefähr umgekehrt proportional zur Bandbreite des Filters 4 ist. Unter der Annahme, daß $\hat{\Phi}(t) = \alpha \cdot \Phi(t)$ ($\alpha \lesssim 1$) ist, ist der Hub von $U_{FM}$ gegenüber $U_{FM1}$ auf $h_{FM} = (1-\alpha) \cdot h_{FM1}$ reduziert. Dieses Signal wird demoduliert, wodurch man als demoduliertes Signal erhält

$$U'_{MPX}(t) = (1-\alpha) \cdot U_{MPX_1}(t-T).$$

Durch die Stereo-Demodulation erhält man daraus die Audiosignale $U_L$ und $U_R$, sowie den Pilotton $U_P$. Falls man jeweils die Werte zu dem Zeitpunkt berücksichtigt, an denen $\sin 2\pi \cdot 2 \cdot f_P t = 1$ bzw. $-1$ ist, folgt aus Gleichung (1)

$$U_{MPX+} = U_{L+R} + U_{L-R} \pm P/\sqrt{2} = 2U_L \pm P/\sqrt{2}$$

$$U_{MPX-} = U_{L+R} - U_{L-R} \mp P/\sqrt{2} = 2U_R \mp P/\sqrt{2}$$

Aus der Kenntnis von P lassen sich durch Subtraktion aus diesen Signalen direkt $U_L$ und $U_R$ gewinnen.

Durch das Filter 7 und das Pilottonfilter 17 ergeben sich weitere Verzögerungen, die sich zu T bzw. $T_1$ summieren. Daraus ergeben sich die gefilterten Signale wie folgt:

$$U'_L(t) = (1-\alpha) \cdot U_L(t-T),$$

$$U'_R(t) = (1-\alpha) \cdot U_R(t-T),$$

$$U'_P(t) = U_P(t-T_1) = (1-\alpha) \cdot P \cdot \sin 2\pi f_P(t-T_1). \tag{2}$$

Durch eine frequenzabhängige Verstärkung um $1/(1-\alpha)$ für $f = 0$ läßt sich die ursprüngliche Amplitude wiederherstellen. Um näherungsweise $\hat{\Phi}(t) \approx \Phi(t)$ zu erreichen, ist darüberhinaus eine Extrapolation um T bzw. $T_1$ in die Zukunft erforderlich. Diese gelingt wegen der Struktur des Stereo-Multiplexsignals exakt für den Pilotton und den unterdrückten Stereoträger. Wegen der geringen Laufzeit in den Filtern ist sie auch für die beiden Audiosignale möglich.

Im Stereo-Demodulator liegt das Signal

$$U'_P(t) = (1-\alpha) \cdot P \cdot \sin Z\pi f_P(t-T_1)$$

vor. Die Filter lassen sich in ihrer Laufzeit exakt dimensionieren. Sei beispielsweise die Laufzeit T bzw. $T_1$ ein Vielfaches der Abtastperiode $\Phi$, ergibt sich dann $T = n \cdot \Theta$ und $T_1 = n_1 \cdot \Theta$. Der in der Zukunft liegende Pilotton läßt sich damit auf den Pilotton im Stereo-Demodulator zurücktühren.

Mit $t = m \cdot \Theta$, wobei m ein Laufindex ist, ergibt sich folgendes:

$$\sin 2\pi f_P m\Theta = \sin[2\pi f_P(m\Theta - T_1) + 2\pi f_P T_1]$$

$$= \sin 2\pi f_P \Theta[(m-n_1) - (k-n_1)].$$

Dabei ist k das ganzzahlige Verhältnis zwischen Abtasttakt und Pilottonfrequenz. Der zukünftige Pilotton läßt sich damit unter der Voraussetzung, daß k ganzzahlig ist, aus dem am Ausgang des Filters 17 anliegenden Pilotton gewinnen. In entsprechender Weise läßt sich der Träger des Differenzbandes ermitteln:

$$\sin 4\pi f_P m\Theta = \sin 4\pi f_P \Theta[(m-n_1) - (k/2-n_1)]$$

Das bedeutet, daß der zukünftige Stereoträger gleich dem um $k/2 - n_1$ Abtastwerte verzögerten Stereoträger ist.

Der Verkehrsfunkträger und der unterdrückte RDS-Träger lassen sich entsprechend vorhersagen. Wegen des geringen Hubanteils dieser Signale ist eine Phasengegenkopplung bei dem Ausführungsbeispiel jedoch nicht vorgesehen.

Die stärksten Änderungen des Stereo-Multiplexsignals treten in den angegebenen Trägern auf. Diese sind jeweils mit relativ langsamen, das heißt, während der Laufzeit T nur in geringem Maß veränderlichen Signalen moduliert. Das gesuchte Stereo-Multiplexsignal zum Zeitpunkt $m\Theta$ läßt sich somit aus dem Stereo-Multiplexsignal zum Zeitpunkt $(m-n)\Theta$ wie folgt herleiten:

$$U_{MPX} = \{1/(1-\alpha)\}\cdot\{U_{L+R}[(m-n)\Theta+n\Theta] + U_P[(m-n_1)\Theta-(k-n_1)\Theta]$$

$$+U_{L-R}[(m-n)\Theta+n\Theta]\cdot U_{SC}[(m-n_1)\Theta-(k/2-n_1)\Theta]\}.$$

Dabei steht $U_{SC}$ für den unterdrückten Stereoträger. Dadurch ist die Extrapolation des an sich breitbandigen Stereo-Multiplexsignals auf eine Extrapolation des Monosignals und des Differenzsignals zurückgeführt, die lediglich eine Bandbreite von 15 kHz aufweisen. Günstig sind quadratische oder lineare Extrapolationen.

Verzichtet man ganz auf eine Extrapolation dieser Größen, so stellt dieses Signal das extrapolierte Stereo-Multiplexsignal dar. Es wird mit dem Faktor $\alpha$ multipliziert, integriert und beispielsweise mit Hilfe einer Sinustabelle umgerechnet in

$$e^{-j\Phi}.$$

Dieses Signal wird mit einem angemessenen Faktor $A_0$ (beispielsweise eins) multipliziert und als $U_{FM2}(t)$ dem Mischer 3 zugeführt.

Dadurch, daß der Stereoträger exakt vorhergesagt wurde, treten durch die Phasengegenkopplung nur Verzerrungen auf, die sich nach der Demodulation als lineare Verzerrungen im Monosignal und im Differenzsignal äußern. Diese lassen sich durch einen entgegengesetzten Filterverlauf im Audiobereich rückgängig machen. Ohne Extrapolation von $U_{L\pm M}$ gilt für die lineare Verzerrung der Audiosignale $H(f) = 1-\alpha e^{-j2\pi fT}$. Da dieses Filter für $\alpha<1$ keine Pole hat, läßt sich ein inverses Filter mit dem Übertragungsfaktor $H'(f) = 1/(1-\alpha e^{-j2\pi fT})$ erzeugen, das die linearen Verzerrungen beseitigt. Ein solches Filter läßt sich jeweils zwischen dem Stereo-Demodulator 9 und den Extrapolatoren 15, 16 einsetzen und gibt die Frequenzabhängigkeit des Faktors $1/(1-\alpha)$ in Gleichung (2) an.

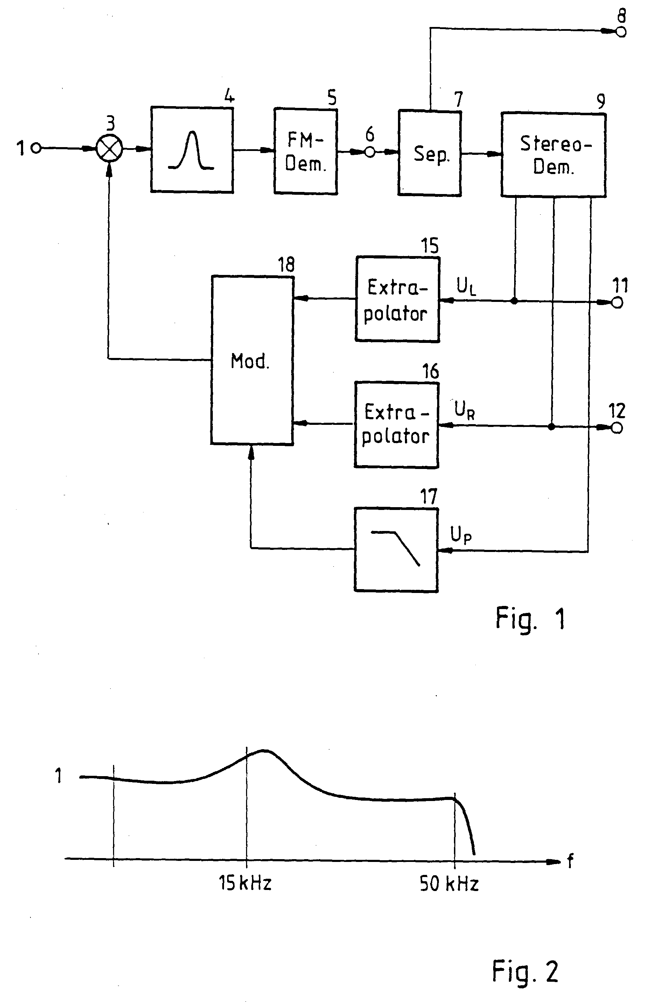

Oberhalb der Nutzsignalbandbreite kann das Filter als Allpaß bis zur Bandbreite des gesamten Multiplexsignals ausgelegt werden. Es hat beispielsweise den in Fig. 2 dargestellten Frequenzgang, bei dem der Betrag des Übertragungsfaktors

$$IH'(f)I = (1-\alpha)/(1+\alpha^2-2\alpha\cos 2\pi ft)^{\frac{1}{2}}$$

ist.

**Patentansprüche**

1. Einrichtung zum Empfang eines FM-Signals, bei der ein Zwischenfrequenzsignal mit reduziertem Frequenzhub durch Mischung mit einem weiteren Zwischenfrequenzsignal erzeugt und nach einer schmalbandigen Filterung demoduliert wird, wobei zur Bildung des weiteren Zwischenfrequenzsignals wenigstens ein Extrapolator (15, 16) vorgesehen ist, der ein Audiosignal um die in allen Filtern (4, 7) auftretende Laufzeit in die Zukunft extrapoliert und wobei ein digitales Filter (17) ein Pilottonsignal, einen Verkehrsfunkträger oder einen unterdrückten Träger für das Differenz- oder RDS-Signal um eine vorgegebene Zeitspanne verzögert, wobei die Zeitspanne für einen Stereoträger k/2-n1 Abtastintervalle beträgt, dabei ist k das ganzzahlige Verhältnis von Abtasttakt und Pilottonfrequenz und n1 das Verhältnis von Laufzeit T bzw. T1 und Abtastperiode $\phi$.

2. Einrichtung nach Anspruch 1, wobei das demodulierte Signal ein Stereo-Multiplexsignal ist, aus welchem nach einer Demodulation eines darin enthaltenen Stereosignals zwei Audiosignale und ein Pilotton gewonnen werden, wobei das weitere Zwischenfrequenzsignal aus extrapolierten Werten des Pilottons und momentanen Werten der Audiosignale gebildet wird.

3. Einrichtung nach Anspruch 2, dadurch gekennzeichnet, daß zur Bildung des weiteren Zwischenfrequenzsignals ferner die Audiosignale extrapoliert werden.

4. Einrichtung nach Anspruch 2, dadurch gekennzeichnet, daß zur Demodulation des Stereoträgers ein Synchrondemodulator vorgesehen ist und daß ein Tiefpaßfilter (17) für den Pilotton eine Bandbreite von etwa 53 kHz aufweist.

5. Einrichtung nach Anspruch 4, dadurch gekennzeichnet, daß Reste des Pilottons durch Subtraktion entfernt werden.

6. Einrichtung nach Anspruch 1, dadurch gekennzeichnet, daß Beeinflussungen der Audiosignale durch NF-Filter kompensiert werden.

7. Einrichtung nach Anspruch 2, dadurch gekennzeichnet, daß bei der Bildung des weiteren Zwischenfrequenzsignals für unterschiedliche Anteile des Stereo-Multiplexsignals unterschiedliche Verstärkungsfaktoren gewählt werden.

8. Einrichtung nach Anspruch 7, dadurch gekennzeichnet, daß der Verstärkungsfaktor für den Pilotton im Sinne einer wesentlich stärkeren Gegenkopplung höher als für die anderen Anteile gewählt wird.

9. Einrichtung nach Anspruch 1, dadurch gekennzeichnet, daß ein bei der Bildung des weiteren Zwischenfrequenzsignals angewandter Verstärkungsfaktor pegelabhängig steuerbar ist, so daß bei geringer Lautstärke die Gegenkopplung kleiner ist als bei hoher Lautstärke.

## Claims

1. Device for receiving an FM signal, in which an intermediate frequency signal with a reduced frequency deviation is generated by mixing with a further intermediate frequency signal and demodulated after narrowband filtering, there being provided for forming the further intermediate frequency signal at least one extrapolator (15, 16) which extrapolates an audio signal into the future by the propagation time occurring in all the filters (4, 7), and a digital filter (17) delaying a pilot tone signal, a traffic programme carrier or a suppressed carrier for the differential or RDS signal by a prescribed period, the period being $k/2-n1$ sampling intervals for a stereo carrier, where k is the integral ratio of the sampling clock pulse and pilot tone frequency, and nl is the ratio of the propagation time T or T1 and the sampling period $\phi$.

2. Device according to Claim 1, in which the demodulated signal is a stereo multiplex signal from which two audio signals and a pilot tone are obtained after demodulation of a stereo signal contained therein, the further intermediate frequency signal being formed from extrapolated values of the pilot tone and instantaneous values of the audio signals.

3. Device according to Claim 2, characterized in that the audio signals are extrapolated in addition in order to form the further intermediate frequency signal.

4. Device according to Claim 2, characterized in that a synchronous demodulator is provided for demodulating the stereo carrier, and in that a low-pass filter (17) for the pilot tone has a bandwidth of approximately 53 kHz.

5. Device according to Claim 4, characterized in that remainders of the pilot tone are removed by subtraction.

6. Device according to Claim 1, characterized in that influences on the audio signals are compensated by NF filters.

7. Device according to Claim 2, characterized in that in forming the further intermediate frequency signal different gains are selected for different components of the stereo multiplex signal.

8. Device according to Claim 7, characterized in that for the purpose of a substantially stronger feedback gain for the pilot tone is selected to be higher than for the other components.

9. Device according to Claim 1, characterized in that a gain applied in forming the further intermediate frequency signal can be controlled as a function of level so that the feedback is smaller for a low volume than for a high volume.

## Revendications

1. Installation pour recevoir un signal MF
dans laquelle
on génère un signal de fréquence intermédiaire à excursion de fréquence réduite en mélangeant avec un autre signal de fréquence intermédiaire et après un filtrage en bande étroite on démodule, et pour former l'autre signal de fréquence intermédiaire il est prévu au moins un extrapolateur (15, 16) qui extrapole un signal audio, pour l'avenir, pour tous les temps de parcours dans tous les filtres (4, 7) et un filtre numérique (17) retarde un signal de son pilote, une porteuse de radio de circulation ou une porteuse supprimée pour le signal de différence ou le signal RDS, d'un intervalle de temps prédéterminé, cet intervalle de temps comportant des intervalles de détection pour une porteuse stéréo k/2-n1, k étant le rapport entier de la cadence de détection et de la fréquence de son pilote et n1 représentant le rapport entre le temps de parcours T ou T1 et la période de détection $\Phi$.

2. Installation selon la revendication 1,
dans laquelle
le signal démodulé est un signal multiplex stéréo à partir duquel, après démodulation d'un signal stéréo qu'il contient, donne deux signaux audio et un son pilote, et l'autre signal de fréquence intermédiaire est formé à partir des valeurs extrapolées du son pilote et des valeurs instantanées des signaux audio.

3. Installation selon la revendication 2,
caractérisée en ce que
pour former l'autre signal de fréquence intermédiaire on extrapole en outre les signaux audio.

4. Installation selon la revendication 2,
caractérisée en ce que
pour démoduler la porteuse stéréo il est prévu un démodulateur synchrone et un filtre passe-bas (17) du son pilote à une largeur de bande d'environ 53 kHz.

5. Installation selon la revendication 4,
caractérisée en ce que
le reste du son pilote est enlevé par soustraction.

6. Installation selon la revendication 1,
caractérisée en ce que
l'influence exercée sur les signaux audio par les filtres BF est compensée.

7. Installation selon la revendication 2,
caractérisée en ce qu'
en formant l'autre signal de fréquence intermédiaire pour des composantes différentes du signal multiplex stéréo on choisit des coefficients d'amplification différents.

8. Installation selon la revendication 7,
caractérisée en ce que
le coefficient d'amplification du son pilote est choisi plus élevé que pour l'autre composante dans le sens d'un contre-couplage considérablement plus intense.

9. Installation selon la revendication 1,
caractérisée en ce qu'
un coefficient d'amplification appliqué à la formation de l'autre signal de fréquence intermédiaire est commandé en fonction du niveau de sorte que, pour une intensité sonore faible, le contre-couplage soit inférieur à celui d'une intensité de son forte.

Fig. 1

Fig. 2